(19) **Europäisches Patentamt**

**European Patent Office**

**Office européen des brevets**

(11) Veröffentlichungsnummer: **0 423 067 A1**

(12) # EUROPÄISCHE PATENTANMELDUNG

(21) Anmeldenummer: **90810723.8**

(22) Anmeldetag: **20.09.90**

(51) Int. Cl.⁵: **D02H 3/00**

(30) Priorität: **09.10.89 CH 3680/89**

(43) Veröffentlichungstag der Anmeldung:
**17.04.91 Patentblatt 91/16**

(84) Benannte Vertragsstaaten:
**CH DE ES FR IT LI**

(71) Anmelder: **Benninger AG**
**Fabrikstrasse**
**CH-9240 Uzwil(CH)**

(72) Erfinder: **Beerli, Markus**
**Amselstrasse 15**
**CH-9202 Gossau(CH)**
Erfinder: **Zeller, Hans-Peter**
**Bogenstrasse 41**
**CH-9230 Flawil(CH)**

(74) Vertreter: **Hepp, Dieter et al**
**Hepp, Wenger & Partner AG Marktgasse 18**
**CH-9500 Wil(CH)**

(54) **Konusschärmaschine und Schärverfahren.**

(57) An einer Konus schärmaschine sind separate Antriebsmotoren (30, 35) zur Verlagerung des Schärschlittens (25) in X- bzw. in Y-Richtung vorgesehen. Ausserdem werden separate Stellsignale für die beiden Stellmotoren (30, 35) erzeugt, wobei sowohl der Absolutwert der Stellsignale als auch ihr Verhältnis zueinander gespeichert und durch Korrekturwerte korrigierbar ist. Zur Korrektur ist eine Programmsteuereinrichtung (62) und/oder ein Regler (67) bzw. Korrekturschaltungen (64, 66) vorgesehen.

Fig 2

## KONUSSCHÄRMASCHINE UND SCHÄRVERFAHREN

Die Erfindung betrifft eine Konusschärmaschine gemäss Oberbegriff von Anspruch 1 sowie ein Verfahren zum Schären von Fäden gemäss Oberbegriff von Anspruch 10.

Bei Schärmaschinen, wie sie z.B. aus der DE-A1-38 12 045 der Anmelderin und der DE-PS-25 10 517 bekannt sind, ist ein Schärriet zusammen mit einer Umlenk- oder Anpresswalze auf einem Schärschlitten angeordnet. Beim Schären wird eine Vielzahl von Fäden durch das Schärriet geführt und durch die Umlenk- oder Anpresswalze an die Schärtrommel geführt, wobei bandweise Fäden jeweils zu einem Wickel aufgewickelt werden. Das erste Band wird dabei zu einem Wickel mit parallelogrammförmigem Querschnitt auf den Konus der Schärtrommel gewikkelt. Sobald das erste Band aufgewickelt ist, wird das nächste Band unmittelbar neben dem fertig gewickelten Band auf der Trommel angelegt und gleichfalls mit der entsprechenden Fadenlänge und parallelogrammförmigem Querschnitt unmittelbar anschliessend aufgewickelt. Dieser Vorgang wird für die folgenden Bänder entsprechend wiederholt, bis die gesamte Fadenkette auf der Schärtrommel aufgewickelt ist. Für den Wickelvorgang jedes Bandes muss zunächst der Schärschlitten in eine Anfangsposition gebracht werden, aus der er kontinuierlich entsprechend dem Anwachsen des Bandes und der Schräge des Konus verlagert wird, um den parallelogrammförmigen Aufbau zu ermöglichen. Gleichzeitig wird die Anpresswalze mit zunehmender Wickeldicke zurückgezogen, um den Anpressdruck möglichst konstant zu halten. Bei den bekannten Schärmaschinen dieser Gattung ist deshalb ein gemeinsamer Antrieb für den Schärschlitten und den Vorschub der Anpresswalze vorgesehen, mit welchem mechanisch und zwangsweise das Verhältnis von seitlicher Schlittenverlagerung und Vorschub der Anpress walze bestimmt wird. Bei solchen Schärmaschinen ist es auch bekannt, zunächst einen Messwickel auf der Schärtrommel zu erzeugen, die Dikke des Messwickels in Abhängigkeit von der Umdrehungszahl der Schärtrommel zu bestimmen und in Abhängigkeit von diesem Messwert den gemeinsamen Vorschub von Schärschlitten und Anpresswalze ggf. zu korrigieren. Eine derartige Korrektur bewirkt aber nur die Vergrösserung oder Verkleinerung beider Vorschubwerte (parallel und radial zur Schärtrommel), ohne dass sich dadurch der aus dem gleichzeitigen Verlagern in X- und Y-Richtung ergebende Winkel verändern würde. Wenn aber die Richtung der Schärschlitten-Bewegung nicht exakt mit dem Konus-Winkel übereinstimmt, werden die Bänder ungleichmässig gewickelt. Schon aufgrund von Fertigungstoleranzen beim Konus der Schärtrommel und bei den Getrieben für Schärschlitten und Anpresswalze lassen sich derartige Probleme in der Praxis kaum vermeiden. Ausserdem ergibt sich daraus die Notwendigkeit, den Konus der Schärtrommel möglichst exakt herzustellen, was aufwendige Konstruktion und Fertigungsverfahren bedingt.

Aufgabe der Erfindung ist es, die Nachteile des Bekannten zu vermeiden, insbesondere also eine Konusschärmaschine und ein Schärverfahren zu schaffen, welche exakte und winkelgerechte Bandführung ermöglichen. Ausserdem soll der Fertigungsaufwand vor allem für die Herstellung des Trommel-Konus verringert und der Einsatz von Schärtrommeln mit variierendem Konus -sei es durch Fertigungstoleranzen oder durch Austausch -ermöglicht werden. Erfindungsgemäss wird dies bei einer Konusschärmaschine insbesondere gemäss Kennzeichen von Anspruch 1 und Anspruch 10 erreicht.

Durch die Trennung der Antriebe in einen parallel zur Schärtrommel (in X-Richtung) und einen radial zur Schärtrommel (in Y-Richtung) wirkenden Antrieb mit je einem separaten Antriebsmotor lässt sich jede beliebige Bewegung des Schärriets und/oder einer Umlenk- oder Anpresswalze durchführen. Im Normalfall wird dabei die Anpresswalze wie bei den bisher bekannten Schärmaschinen auf einem Schärschlitten angeordnet sein. Der Schärschlitten trägt erfindungsgemäss den separaten Antriebsmotor. Selbstverständlich ist es aber auch denkbar, Anpresswalze und Schärriet auch separat (z.B. auf zwei verschiedenen Schlitten) zu lagern. Der Anpressdruck der Umlenk-oder Anpresswalze richtet sich dabei nach dem Anwendungsfall, insbesondere auch nach den auf zuwickelnden Fäden. Selbstverständlich können auch mehrere Anpresswalzen oder auch eine Umlenk- und eine oder mehrere Anpresswalzen vorgesehen sein.

Durch die Verwendung von zwei separaten Antriebsmotoren lässt sich Vorschubdauer und Vorschubgeschwindigkeit in X- und in Y-Richtung getrennt steuern oder regeln, wobei auch das Antriebsverhältnis der beiden Antriebsmotoren und damit die resultierende Winkelbewegung des Schärschlittens steuerbar oder regelbar ist. Der Vorschub des Schärschlittens und/oder der Anpresswalze kann dabei z.B. in einer Programm-Steuereinrichtung vorprogrammiert und abgerufen werden. Derartige z.B. aus dem Werkzeugmaschinenbau bekannte Steuereinrichtungen erlauben die Anpassung des Vorschubs in X-und Y-Richtung in derart genauer Weise, dass Anpresswalze und Schärschlitten der Kontur des Trommel-Konus zuverlässig folgen. Dies lässt sich sowohl mit Digital- als auch mit Analogsteuerungen erreichen. Auch die Veränderung des Verhältnisses X:Y ist mit bekannten Steuereinrichtungen ohne weiteres zu verwirklichen, wodurch die X-Y-Auslenkung des Schärschlittens nachträglich an einen bestehenden Konus-Winkel angepasst werden kann. Der Konus selbst kann also mit wesentlich geringeren Genauigkeitsanforderungen gefertigt werden, und es kann auch ein Austausch erfolgen, ohne dass langwierige Getriebeeingriffe und Anpassungen notwendig wären. Statt der Programmsteuerung (oder zusätzlich zur Programmsteuerung) kann auch eine echte Regelung des Vorschubs der beiden Antriebsmotoren vorgenommen werden. Als Regelgrösse lässt sich dabei z.B. mittels eines Abstandsfühlers der Abstand des Schärschlittens zum Konus und/oder zu einem vorhergehenden Band-Wickel abtasten. Es wäre auch denkbar, z.B. gemäss DE-GM-18 13 495 die Schärschlitten-Verstellung mittels einer Lichtschranke mit Reflexband zu steuern oder zu regeln. Zur Korrektur von vorgegebenen Steuerwerten und/oder als Rückführgrösse für die Regelung kann auch der effektive Zuwachs des Band-Wickels in Abhängigkeit von den Umdrehungen der Schärtrommel überwacht und zur Bildung einer Rückführgrösse oder eines Werts für die Regelabweichung verwendet werden.

Für den Antrieb in X- und Y-Richtung lässt sich vorteilhaft ein Servosystem einsetzen, bei dem der Motor angetrieben und die jeweilige Drehbewegung durch einen Tachometer überwacht und rückgemeldet wird. Vor allem in Verbindung mit digitalen Reglern oder Steuerungen eignen sich Schrittmotoren besonders gut als Antriebsmotoren.

Je nach Anwendungsfall sind auch andere Arten von Antriebsmotoren, z.B. hydraulische oder pneumatische Motoren vorteilhaft einsetzbar.

Vor allem bei Anordnungen mit Mehrfach-Rückführung von Führungsgrössen oder Störgrössen und mit programmierbaren und korrigierbaren Vorschubwerten ist es vorteilhaft, wenn ein elektronischer Rechner zur Durchführung der Vergleichs-, Korrektur- und Steuer- und/oder Regelfunktionen vorgesehen ist. Dabei lässt sich auch der Rechner mit einer Messanordnung zum Messen des Dicken-Zuwachses des Messwickels verbinden und ein Vergleich mit einem vorgebbaren Sollwert für den Dicken-Zuwachs durchführen, so dass Abweichungen erfasst und zur Erzeugung von Korrektursignalen verwendet werden können.

Der Rechner kann dabei selbstverständlich auch so ausgelegt sein, dass gleichzeitig andere Funktionen der Schärmaschine überwacht werden, dass z.B. die Umdrehungswerte und der Band-Wickelzuwachs zur Berechnung der Bandlänge verwendet werden oder dass Abschalt- oder Alarmfunktionen für bestimmte Betriebsbedingungen vorgesehen werden. Die Programmsteuerfunktion des Rechners kann dabei automatische Rückführung des Schärschlittens und/oder automatisches Verfahren des Schärschlittens an den Ansatzpunkt zum Neuansetzen eines Bandes vorsehen.

Die Erfindung ist im folgenden in Ausführungsbeispielen anhand der Zeichnungen näher erläutert. Es zeigen:

Figur 1 eine Schäranlage mit den Merkmalen der Erfindung im Seitenriss

Figur 2 die Antriebselemente für den Schärschlitten in vergrössertem Massstab,

Figur 3 den Vorschub-Weg des Schärschlitten vom fertig gewickelten Band zum neuen Ansatzpunkt,

Figur 4 die Verschiebung des Schärschlittens von der Endposition nach dem Schären zurück zum Konus-Ansatzpunkt,

Figur 5 ein Funktionsschema einer Schärschlittenansteuerung mit den Merkmalen der Erfindung und

Figur 6 ein abgewandeltes Funktionsschema.

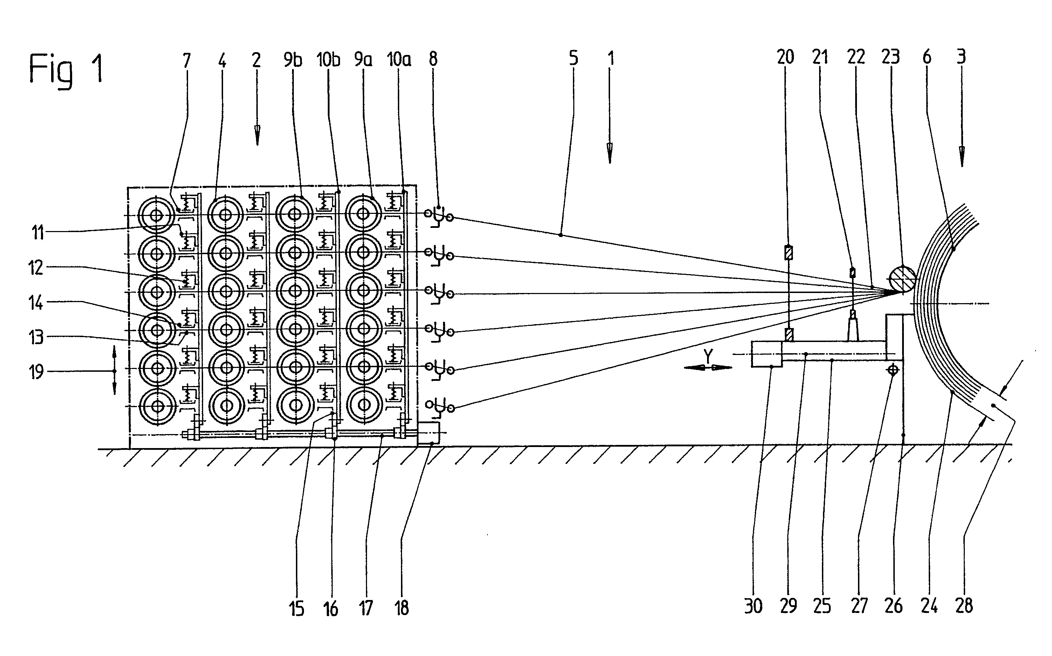

Gemäss Figur 1 weist eine Schäranlage 1 ein Spulengatter 2 und eine Schärmaschine 3 auf. Im Spulengatter 2 sind eine Vielzahl von Spulen 4 aufgesteckt, von denen Fäden 5 abgezogen und auf einer Schärtrommel 6 zu einem Band 28 aufgewikkelt werden. Die Fäden 5 sind über je einen Fadenspanner 7, zur Erzeugung einer bestimmten Fadenspannung und einen Fadenwächter 8 zur Ueberwachung von Fadenbruch geführt. Für jede senkrechte Spulenreihe 9a, 9b usw. sind die zugehörenden Fadenspanner zusammengefasst und über senkrechte Bremsstangen 10a, 10b etc. auslenkbar. Jeder Fadenspanner 7 weist einen Winkel 11, eine Druckfeder 12 und einen oberen bzw. einen unteren Bremsteller 14 bzw. 13 auf. Die Bremsstangen 10a, 10b etc. sind zur Auslenkung in vertikaler Richtung und zur Betätigung der Bremsteller am unteren Ende mit einer Rolle 15 versehen, welche über einen Exzenter mit einer horizontalen Welle 17 verbunden ist. Durch Verdrehen des Stellmotors 18 sind die Exzenter 16 verdrehbar, wodurch die Bremsstangen 10 in Richtung des Pfeils 19 aufwärts oder abwärts verschoben und dadurch die Bremstel ler 14 zur Erhöhung oder Verringerung der Fadenspannung mehr oder weniger stark gegen die unteren Bremsteller 13 gedrückt werden können.

Die vom Spulengatter 2 abgezogenen Fäden 5 passieren vor der Schärtrommel 6 ein Kreuzriet 20, in welchem die Vielzahl der Fäden 5 die gewünschte Fadenordnung erhält. Anschliessend werden die Fäden 5 durch das Schärriet 21 geführt und dabei zu einem Fadenverband 22 zusammengefasst, der dann über eine Umlenkwalze oder eine Anpresswalze 23 geführt und als Band 24 auf die Schärtrommel 6 gewickelt wird.

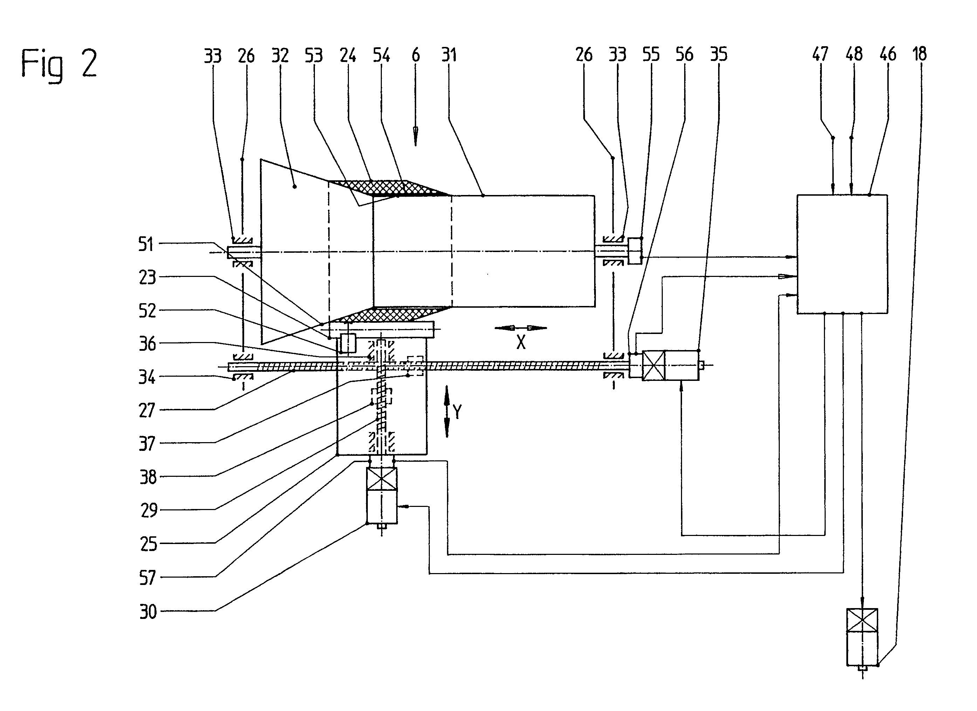

Das Kreuzriet 20, das Schärriet 21 und die Anpresswalze 23 sind auf einem Schärschlitten 25 befestigt, welcher an einem nicht näher dargestellten Schärmaschinengestell 26 gelagert und über Längsspindel 27 parallel zur Schärtrommel 6, d.h. in X-Richtung (Figur 2) verlagerbar ist. Der Schärschlitten 25 ist auch - bezogen auf die Schärtrommel 6 - radial, d.h. in Y-Richtung verschiebbar. Er ist dazu mittels einer schematisch angedeuteten Querspindel 29 durch einen Antriebsmotor 30 verlagerbar.

Gemäss Darstellung in Figur 2 ist die Schärtrommel 6 mit ihrem zylindrischen Teil 31 und dem konischen Teil 32 in schematisch dargestellten Lagerstellen 33 im Maschinengestell 26 drehbar gelagert und über nicht näher dargestellte Antriebselemente angetrieben.

Die Längsspindel 27 ist in Lagerstellen 34 gelagert und mittels eines Antriebsmotors 35 derart antreibbar, dass sich in bekannter Weise der Schärschlitten 25 über Spindelmutter 37 parallel zur Achse der Schärtrommel 6 bewegt.

Am Schärschlitten 25 ist eine Anpresswalze 23 in bekannter Weise befestigt, so dass bei einer Verdrehung der Querspindel 29 in der Lagerstelle 36 über Spindelmutter 38 ein Vorschub des Schärschlittens in Y-Richtung bewirkt wird.

Auf dem Schärschlitten 25 ist ein Tastelement 52 montiert, welches gemäss CH-PS-669 408 erlaubt, nach dem Erzeugen einer Grundwicklung 53 die Dicke eines Messwickels 54 zu messen. Gleichzeitig wird mittels eines Umdrehungszählers 55 die Anzahl Umdrehungen der Schärtrommel 6 ermittelt, so dass der Dickenzuwachs pro Umdrehung in einem Rechner 46 festgestellt werden kann. (Der Ausgang des Tastelements 52 ist ebenfalls mit einem Eingang des Rechners 46 verbunden, was aus Gründen der Uebersichtlichkeit nicht dargestellt ist.) Im Rechner 46 sind Sollwerte für die Ansteuerung der beiden Antriebsmotoren 30, 35 in X- bzw. in Y-Richtung gespeichert. Diese Werte können z.B. während oder nach der Erzeugung des Messwickels überprüft werden, und sofern sich dabei eine Abweichung der Ist-Dicke pro Umdrehung von der Soll-Dicke des Messwickels pro Umdrehung ergibt, kann eine Korrektur der an die Antriebsmotoren 30, 35 abgegebenen Stellsignale erfolgen. Die Antriebsmotoren 30 und 35 sind dabei jeweils Teil eines Servo-Antriebssystems, welches Messgeber 56 und 57 enthält, welche die Ist-Lage der Querspindel 29 und der Längsspindel 27 an den Rechner zurückmelden.

Durch die separate Ansteuerung in X- bzw. in Y-Richtung lässt sich die Bewegung des Schärschlittens 25 und der Anpresswalze 23 exakt so steuern oder regeln, dass sich der in Figur 2 bis 4 ersichtliche parallelogrammartige Wickelaufbau ergibt, der exakt der Kontur des Konus bzw. der Konuslinie 51 folgt. Im praktischen Einsatz kann deshalb z.B. die Schärtrommel 6 mit einem flacheren oder steileren Konus 32 ausgerüstet werden -z.B. für Baumwolle mit einem steileren Konus, dagegen für synthetische Fäden mit einem flacheren Konus 32, um ein Abrutschen der Fäden 5 beim Aufwickeln zu vermeiden. In jedem Fall erlaubt der Einzelantrieb in X- und in Y-Richtung die Anpassung an beliebige Konuswinkel, wobei auch Fertigungstoleranzen durch Eingriff in den Steuervorgang und/oder durch Regelung so ausgeglichen werden können, dass der Bandwickel 24 immer genau der Konuslinie folgt.

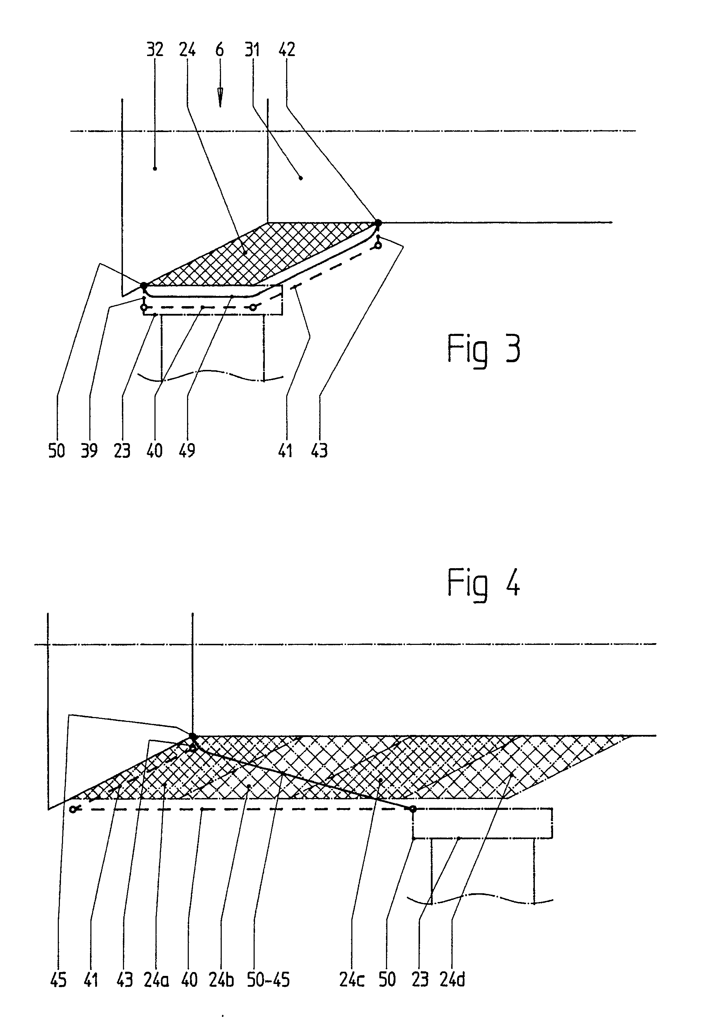

Aus Figur 3 und 4 ist eine weitere vorteilhafte Anwendungsmöglichkeit der Erfindung ersichtlich: In Figur 3 ist dargestellt, wie bei bekannten Anordnungen der Schärschlitten mit der Anpresswalze 23 nach dem Aufwickeln eines Bandes 24 neu positioniert wird. Zunächst muss bei den bekannten Schärmaschinen das Getriebe für die Bewegung in X-Richtung ausgekuppelt werden, damit der Schärschlitten entlang der Linie 39 zusammen mit der Anpresswalze 23 vom Band 24 abgehoben werden kann. Dann muss das Getriebe für die Bewegung in Y-Richtung ausgekuppelt werden, um den Schärschlitten entlang der Linie 40 parallel zum Wickel nach rechts zu verlagern. Sodann können beide Getriebe wieder eingekuppelt werden, um den Schlitten schräg und parallel zum Konus des Bandwickels 24 entlang der Linie 41 zu bewegen. In der Endphase schliesslich muss erneut das Getriebe für die Bewegung in X-Richtung ausgekuppelt werden, damit die Anpresswalze entlang der Linie 43 zugestellt werden kann. Da die genaue Positionierung in bezug auf den neuen Ansatzpunkt des Bandes 42 von grosser Bedeutung ist, sind manuell durchzuführende Positionierungsmassnahmen ausserordentlich aufwendig und langwierig, was zu Ansatzfehlern führt.

Demgegenüber erlaubt der getrennte Antrieb der beiden Antriebsmotoren für die X-Richtung und die Y-Richtung bei der Erfindung eine absolut genaue Positionierung des Schärschlittens an jedem Ansatzpunkt. Abhängig von der Bandbreite lässt sich der Bewegungsablauf in X-Richtung und in Y-Richtung entweder elektronisch programmieren oder aber z.B. durch Verwendung eines Fühlers, z.B. eines Abstandsfühlers oder einer Wegmesseinrichtung oder auch einer opto-elektronischen Abtasteinrichtung gemäss DE-GM-18 13 495 regeln. Die Antriebseinrichtungen müssen dabei nicht mehr ausgekuppelt werden, da sich die Antriebe separat ansteuern lassen und somit jede beliebige, aus einer Verlagerung in X- und in Y-Richtung resultierende Bewegung erzielt werden kann. Dabei folgt der Schlitten der direkten Bewegungslinie 49 vom Endpunkt 50 zum neuen Ansatzpunkt 42 gemäss Figur 3. Damit arbeitet die erfindungsgemässe Konusschärmaschine nicht nur schneller, sondern es lassen sich auch qualitativ bessere Webketten herstellen.

Vor allem beim Rückführen des Schärschlittens aus der Endposition 50 zum Konusansatzpunkt 45 lässt sich diese direkte Positionierungsmöglichkeit vorteilhaft nutzen. Figur 4 zeigt, wie die Anpresswalze am Ende des Schärvorgangs, nachdem die Bänder 24a bis 24d aufgewickelt wurden, für einen neuerlichen Wickelvorgang zum Konusansatzpunkt 45 zurückbewegt werden muss. Bei konventionellen Anlagen müsste der Schärschlitten entlang der Linie 40 (Fig. 3) zuerst horizontal (Getriebe für den Y-Antrieb ausgekuppelt) verlagert und dann entlang der Linie 41 verfahren werden. Bei der erfindungsgemässen Anordnung lässt sich dagegen der Schärschlitten direkt entlang der Linie 50-45 zustellen.

Dabei lassen sich, wie in Figur 2 dargestellt, über einen Eingang 47 dem Rechner 46 beliebige Korrekturfaktoren oder Bewegungs-Steuerbefehle eingeben. Solche Korrekturfaktoren, die manuell eingegeben oder von entsprechenden Fühlern abge leitet werden können, betreffen insbesondere den Konuswinkel der Schärtrommel 6 sowie etwaige Fertigungstoleranzen des Konuswinkels und des Durchmessers der Schärtrommel 6. Bei Verwendung eines Rechners 46 lassen sich diese Korrekturfaktoren vorteilhaft softwaremässig realisieren. Wie schematisch dargestellt ist, lassen sich ausserdem über einen zweiten Eingang 48 Prozessdaten eingeben wie z.B.:

- Fadenqualität
- Anzahl der Fäden bzw. Bandbreite
- Soll-Kettlänge
- Fadenspannung.

Aus diesen Daten kann der Rechner 46 einen Startvorschub ermitteln und die entsprechenden Soll-Bewegungsabläufe in X-und Y-Richtung für die Antriebsmotoren 35 und 30 berechnen oder korrigieren.

Da die Fadenspannung wesentlichen Einfluss auf die Dickenzunahme des Band-Wickels 24 hat, und damit indirekt auch den Bewegungsablauf des Schärschlittens in Y-Richtung beeinflusst, ist erfindungsgemäss zusätzlich vorgesehen, die Fadenspannung mittels Rechner 46 zu regeln. Dazu wird über einen nicht dargestellten, bekannten Fadenspannungsmesser (z.B. Bandzugregulierungen) die Fadenspannung laufend überwacht, die ermittelten Messwerte werden an den Rechner 46 gegeben, der seinerseits Stellsignale an den Stellmotor 18 (Figur 1 und Figur 2) abgibt. Wie vorstehend beschrieben, verstellt der Stellmotor 18 über Welle 17, Exzenter 16 und Bremsstangen 10 die oberen Bremsteller 14 im Spulengatter 2, so dass auf diese Weise eine konstante Nachregelung der Fadenspannung auf einen Sollwert möglich ist. In Kombination mit der Programmsteuerung oder Regelung des SchärschlittenAntriebs in X- und Y-Richtung wird dadurch besonders vorteilhaft ein genauer und qualitativ hochwertiger Wickelaufbau gewährleistet.

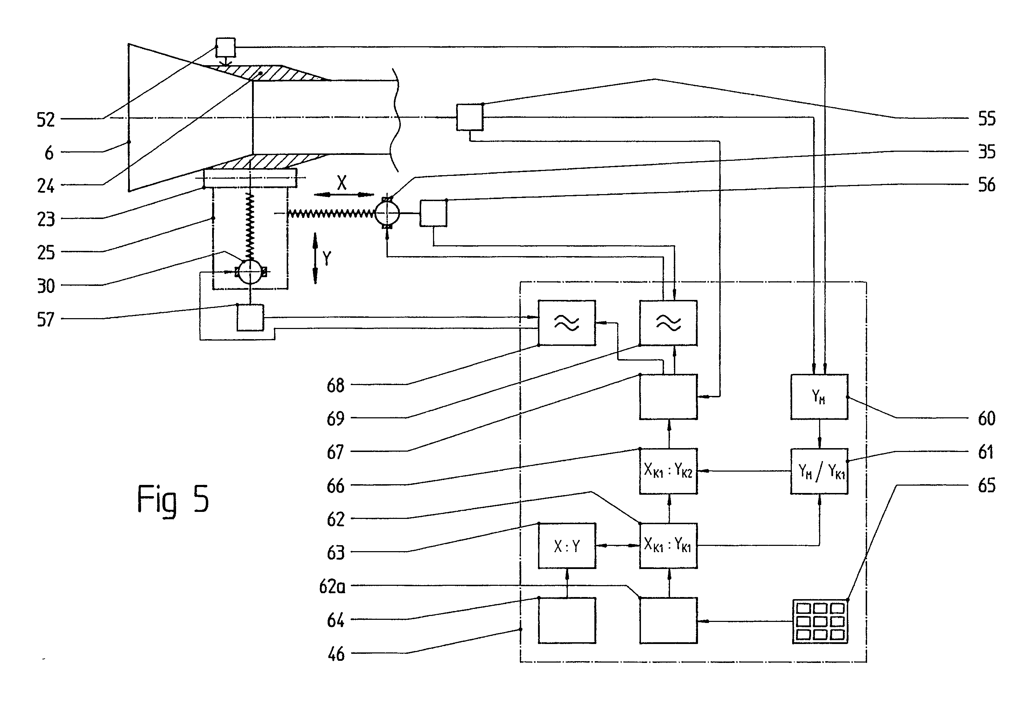

Figur 5 zeigt schematisch die Funktion der erfindungsgemässen Regelung und Steuerung der Antriebsmotoren 30, 35 durch den Rechner 46 gemäss Figur 2. Dabei sind nur die für die Erfindung wesentlichen Funktionsabläufe dargestellt, wobei nicht zwischen hardwaremässig vorgegebenen und softwaregesteuerten Funktionen unterschieden wird. So können z.B. Speicher als frei adressierbare Speicherplätze eines Rechners oder als spezielle PROM's realisiert werden, ohne dass dies einen Einfluss auf die erfindungsgemässen Funktionen hat. Auch Sollwerte können entweder über Software vorgegeben oder z.B. in ROM's geladen werden.

Gleiche Teile sind in Figur 2, 4 und 5 mit gleichen Bezugszeichen bezeichnet. Wie in Figur 5 dargestellt, wird mittels eines als Tastelement 52 ausgebildeten Fühlers die Dicke des Bandwickels 24 gemessen. Gleichzeitig wird durch den Umdrehungszähler 55 die Zahl der Umdrehungen der Schärtrommel 6 gemessen, so dass in einer Logikschaltung 60 der Dickenzuwachs des Wickels und damit der Messwert für den Schlittenvorschub in Y-Richtung ermittelt werden kann. Der jeweilige Ist-Wert für wird an den einen Eingang eines Vergleichers 61 gelegt, an dessen anderen Eingang ein Korrekturwert YK1 für den Vorschub in Y-Richtung gelegt ist. Der Korrekturwert YK1 wird in einer Programmsteuereinrichtung 62 erzeugt. Dabei liegen am einen Eingang der Programmsteuereinrichtung 62 die Basis-Sollwerte für den Vorschub in X- und in Y-Richtung. Diese Basis-Sollwerte sind in einem Speicher 63 gespeichert, der z.B. durch eine Korrektur-Schaltung 64 durch den Hersteller geändert werden kann, um eine Justierung z.B. an verschiedene Konuswinkel/Konustoleranzen vorzunehmen. Die Programmsteuereinrichtung 62 ist mit einer Logikschaltung 62a versehen, in welche durch eine Tastatur 65 Daten eingegeben werden können. Dadurch kann der Benutzer z.B. bestimmte Korrekturen z.B. beim Konuswechsel oder beim Wechsel der ganzen Schärtrommel 6 eingeben. Die Eingabe kann dabei direkt in die Programmsteuereinrichtung 62 erfolgen. Alternativ kann auch eine Modifikation im Speicher 63 software-mässig über Programmsteuereinrichtung 62 oder über Korrekturschaltung 64 vorgenommen werden. Alternativ können selbstverständlich auch z.B durch Austausch von ROM's oder EPROM's im Speicher 63 Korrekturen vorgenommen werden. Durch die Programmsteuereinrichtung 62 mit der Logikschaltung 62a werden damit Korrektur-Vorschubwerte XK1:YK1 erzeugt, die, wie bereits beschrieben, an den Vergleicher 61 gelegt und ausserdem einer zweiten Korrekturschaltung 66 eingespeist werden.

In der Korrekturschaltung 66 wird aufgrund der Rückführgrösse Delta Y vom Vergleicher 61 der Vorschubwert YK1 korrigiert, sofern sich eine Abweichung ergibt. Selbstverständlich ist es auch möglich, nicht nur den Y-Wert sondern auch den X-Vorschub-Wert zu korrigieren, sofern dies erforderlich ist. Die Korrekturwerte XK1 und YK2 werden von der zweiten Korrekturschaltung 66 an den Eingang eines Reglers 67 gelegt, an des sen anderen Eingang Rückführsignale von Umdrehungszähler 55 gelegt sind. Der Regler 67 erzeugt nun Stellsignale für die Antriebsmotoren 30, 35 im Antriebsverhältnis XK1:YK1, das von der zweiten Korrektur schaltung 66 vorgegeben wird. Durch die Rückführung der Umdrehungs-Signale vom Umdrehungszähler 55 ist dabei gewährleistet, dass bei Drehzahlschwankungen der Schärtrommel 6 die Vorschubwerte X und Y an den beiden Motoren 30 und 35 proportional angepasst werden. Der Regler 67 steuert ausgangs seitig je eine Stromversorgungs-Einrichtung 68, 69 für die Antriebsmotoren 30, 35 an. Zusammen mit den Tachometern bzw. Umdrehungs-Messgebern 56, 57 bildet jeder Antriebsmotor 30 bzw. 35 mit der zugeordneten Stromversorgungseinrichtung 68, 69 einen Servo-Antrieb. D.h., dass die Stromversorgungseinrichtung 68, 69 jeweils den Motor 30 bzw. 35 solange ansteuert, bis die von den Messgebern 57, 56 rückgekoppelten Messwerte dem vom Regler 67 abgegebenen Sollwert entsprechen.

Die Rückkopplung des Dickenzuwachswerts pro Umdrehung der Schärtrommel 6 mittels Tastelement 52 kann beispielsweise während eines Schärprozesses nur einmal nach der vorstehend beschriebenen Erzeugung eines Messwickels durchgeführt werden. Die Korrektur des Y-Sollwerts erfolgt dann einmalig, und nach Durchführung der Korrektur wird die Auslenkung des Schärschlittens 25 gesteuert und nicht im eigentlichen Sinn geregelt. Die Programmsteuereinrichtung 62 ist auch mit Vorgabe-Sollwerten zum automatischen Rückführen des Schärschlittens (Fig. 4) und zum automatischen Verlagern an einen neuen Band-Ansatzpunkt (Fig. 3) versehen.

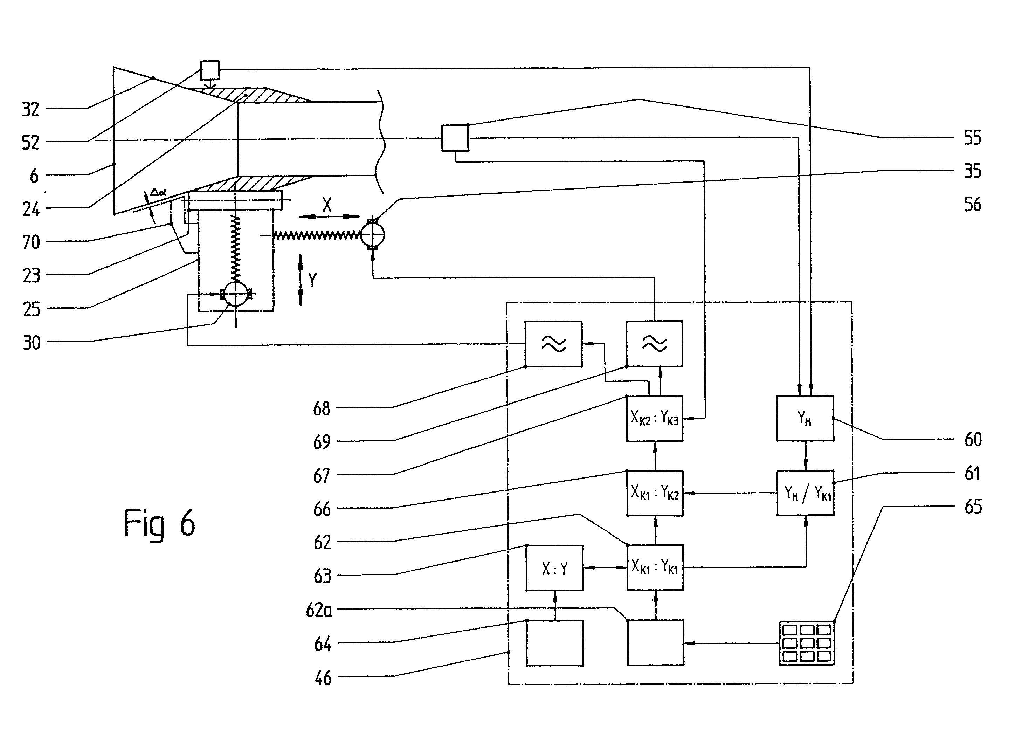

Beim Ausführungsbeispiel gemäss Figur 6 ist dagegen eine Anordnung gezeigt, mit welcher kontinuierliche Regelung möglich ist. Abweichend von Figur 5 ist dabei am Schärschlitten 25 ein Abstandsfühler 70 angeordnet, mit welchem der Abstand Delta a zum Konus 32 der Schärtrommel 6 kontinuierlich gemessen wird. Als Abstandsfühler kann ein handelsüblicher, berührungsloser kapazitiver Fühler verwendet werden. Selbstverständlich ist auch der Einsatz von induktiven opto-elektronischen oder mechanischen Fühlern möglich. Der Wert Delta a wird vom Fühler 70 an den Regler 67 zurückgemeldet, in welchem ein Soll-Abstandswert gespeichert ist. Im Betriebsablauf wird zunächst der Vorschub des Schärschlittens 25 in die X- bzw. Y-Richtung aufgrund der von der Programmsteuereinrichtung 62 abgegebenen Signale vorgenommen. Diese Signale bestimmen auch das Verhältnis des Vorschubs in X-bzw. Y-Richtung. Sobald im Betriebsablauf jedoch der Abstandswert Delta a einen Mindestwert unterschreitet, wird die Antriebsgeschwindigkeit des Motors 30 und/oder des Motors 18 und des Motors 35 erhöht, bis der im Regler 67 vorgegebene Sollwert erreicht wird. Auf diese Weise lässt sich die Position des Schärschlittens 25 und damit auch der Anpressdruck der Anpresswalze 23 genauestens einstellen. Selbstverständlich lassen sich die vom Fühler 70 rückgeführten Messwerte sowohl für eine kontinuierliche Regelung während des gesamten Schärvorgangs verwenden als auch nur zu einer Korrektur von Sollwerten während der Erzeugung eines Messwickels mit an schliessender Programmsteuerung aufgrund der korrigierten Werte.

Die Erfindung ermöglicht damit auf optimal einfache Weise die Erzeugung qualitativ hochwertiger Webketten, den automatischen Ausgleich von Fertigungstoleranzen insbesondere der Schärtrommel sowie eine Vereinfachung des Betriebsablaufs.

## Ansprüche

1. Konusschärmaschine zum Schären von Fäden (5), die von einem Spulengatter (2) abgezogen und bandweise auf eine Schärtrommel (6) auf gewickelt werden, wobei ein Schärriet (21) unter Berücksichtigung des Konuswinkels und der beim Aufwickeln anwachsenden Wickeldicke eines Bandes (24) jeweils seitlich in X-Richtung parallel zur Schärtrommel verschiebbar angeordnet ist, so dass die vom Schärriet (21) zu einem Fadenverband (22) zusammengeführten Fäden (5) in einem trapezförmigen Querschnitt aufgewickelt werden und wobei der Fadenverband (22) durch eine im Vorschub in Y-Richtung gesteuerte Umlenkwalze, vorzugsweise eine Anpresswalze (23) gegen die Schärtrommel (6) führbar, vorzugsweise pressbar ist, dadurch gekennzeichnet, dass die Y-Vorschubeinrichtung (29, 30) und die X-Vorschubeinrichtung (27, 35) zum Verlagern des Schärriets (21) bzw. der Anpresswalze (23) jeweils einen separaten Antriebsmotor (30 bzw. 35) aufweisen, wobei die Antriebsmotoren (30, 35) jeweils als Stellglied in einem Steuer- oder Regelkreis (62, 66, 67) ausgebildet sind, und dass wenigstens eine Steuereinrichtung (62) zur Erzeugung proporticnaler X-Y-Stellsignale in Wirkverbindung mit den Antriebsmotoren (30, 35) steht.

2. Konusschärmaschine nach Anspruch 1, dadurch gekennzeichnet, dass die Steuereinrichtung (62) mit wenigstens einer Anordnung (62a, 64, 66) zum Verändern des Verhältnisses zwischen Vorschub in X-Richtung und Vorschub in Y-Richtung vorgesehen ist.

3. Konusschärmaschine nach Anspruch 1, dadurch gekennzeichnet, dass die Antriebsmotoren (30, 35) als Servomotoren mit Messwertgebern (57, 56) für die jeweilige Relativstellung und/oder Bewegungsgeschwindigkeit der Anpresswalze (23) bzw. des Schärriets (21) ausgebildet sind.

4. Konusschärmaschine nach Anspruch 1, dadurch gekennzeichnet, dass die Antriebsmotoren (30, 35) impulsgesteuerte Elektromotoren, insbesondere Schrittmotoren sind.

5. Konusschärmaschine nach einem der vorangegangenen Ansprüche mit einer Messanordnung (52, 55) zum Ermitteln der Dickenzunahme pro Schärtrommel-Umdrehung, dadurch gekennzeichnet, dass die Messanordnung (52, 55) in Wirkverbindung mit dem Steuer- oder Regelkreis (62, 66, 67) steht und dass eine Anordnung (60, 61) zur Erzeugung von Korrekturfaktoren für das relative Antriebsverhältnis (X:Y) der beiden Antriebsmotoren (30, 35) in Abhängigkeit von der gemessenen Dickenzunahme vorgesehen ist.

6. Konusschärmaschine nach Anspruch 5, dadurch gekennzeichnet, dass ein elektronischer Rechner (46) als Steuer-oder Regelanordnung vorgesehen ist.

7. Konusschärmaschine nach Anspruch 6, dadurch gekennzeichnet, dass der Rechner (46) wenigstens einen Speicher (63) zum Speichern des Antriebs-Verhältniswerts X:Y der beiden Motoren (30, 35) aufweist und dass wenigstens eine Eingabevorrichtung (64, 65) zur Korrektur der Vorgabewerte vorgesehen ist.

8. Konusschärmaschine nach Anspruch 6 oder 7, dadurch gekennzeichnet, dass der Rechner (46) mit der Messanordnung (52, 55, 60) für die Dickenzunahme des Bandwickels (24) in Wirkverbindung steht und dass der Rechner einen Speicher (62) zum Speichern von Soll-Dicken-Signalen aufweist, und dass eine Anordnung (61) zum Vergleichen der Soll-Dicken-Signale mit den Ist-Dicken-Signalen vorgesehen ist.

9. Konusschärmaschine nach Anspruch 6, dadurch gekennzeichnet, dass der Rechner (46) eine Anordnung (66, 67) zum automatischen Aendern der Y-Vorschub-Signale und/oder der X-Vorschub-Signale in Abhängigkeit von einer Rückführgrösse, insbesondere einem Messwert für den Dickenzuwachs des Bandwickels (24) pro Umdrehung oder pro Umdrehungen und/oder einem Messwert für den seitlichen Abstand des Schärriets (25) oder der Anpresswalze (23) zum Schärtrommelkonus (32) bzw. zum vorhergehenden Bankwickel (24a, 24b, 24c oder 24d) aufweist.

10.Konusschärmaschine zum Schären von Fäden (5), die von einem Spulengatter (2) abgezogen und bandweise auf eine Schärtrommel (6) aufgewickelt werden, wobei ein Schärriet (21) unter Berücksichtigung des Konuswinkels und der beim Aufwickeln anwachsenden Wickeldicke eines Bandes (24) jeweils seitlich in X-Richtung parallel zur Schärtrommel verschiebbar angeordnet ist, so dass die vom Schärriet (21) zu einem Fadenverband (22) zusammengeführten Fäden (5) in einem trapezförmigen Querschnitt aufgewickelt werden und wobei der Fadenverband (22) durch eine im Vorschub in Y-Richtung gesteuerte Umlenkwalze, vorzugsweise eine Anpresswalze (23) gegen die Schärtrommel (6) pressbar ist, dadurch gekennzeichnet, dass die Y-Vorschubeinrichtung (29, 30) und die X-Vorschubeinrichtung (27, 35) zum Verlagern des Schärriets (21) bzw. der Anpresswalze (23) jeweils einen separaten Antriebsmotor (30 bzw. 35) aufweisen, wobei die Antriebsmotoren (30, 35) jeweils als Stellglied in einem Steuer- oder Regelkreis (62, 66, 67) ausgebildet sind, und dass wenigstens eine Steuereinrichtung (62) zur Erzeugung proportionaler X-Y-Stellsignale in Wirkverbindung mit den Antriebsmotoren (30, 35) steht, wobei ein elektronischer Rechner (45) als Steuer- oder Regelanordnung vorgesehen ist, welcher wenigstens einen Speicher (63) zum Speichern des An triebs-Verhältniswertes X:Y der beiden Motoren (30, 35) aufweist, und wobei der Rechner eine Anordnung (66, 67) zum automatischen Aendern der Y-Vorschubsignale und/oder der X-Vorschubsignale in Abhängigkeit von einer Rückführgrösse aufweist.

11.Verfahren zum Schären von Fäden (5), die mittels einer Konusschärmaschine von einem Spulengatter (2) abgezogen und bandweise auf eine Schärtrommel (6) aufgewickelt werden, wobei ein Schärriet (21) unter Berücksichtigung des Konuswinkels und der beim Aufwickeln anwachsenden Wickeldicke eines Bandes (24) jeweils seitlich in X-Richtung parallel zur Schärtrommel verschiebbar angeordnet ist, so dass die vom Schärriet (21) zu einem Fadenverband (22) zusammengeführten Fäden (5) in einem trapezförmigen Querschnitt aufgewickelt werden und wobei der Fadenverband (22) durch eine im Vorschub in Y-Richtung gesteuerte Umlenkwalze, vorzugsweise eine Anpresswalze (23) gegen die Schärtrommel (6) pressbar ist, dadurch gekennzeichnet, dass der Vorschub der Umlenk- bzw. der Anpresswalze (23) und/oder des Schärriets (21) in Y-Richtung und die seitliche Verlagerung des Schärriets in X-Richtung jeweils durch getrennte Stellsignale angesteuert wird, und dass das Verhältnis der beiden Stellsignale zueinander jeweils kontinuierlich oder diskontinuierlich in Abhängigkeit von einem Vorgabewert und/oder einem diskontinuierlich ermittelbaren Korrekturfaktor und/oder einem Rückführsignal gesteuert oder geregelt wird.

12.Verfahren nach Anspruch 11, dadurch gekennzeichnet, dass den Stellsignalen entsprechende Sollwerte in einer vor programmierbaren Steuereinrichtung (62, 63) gespeichert werden und dass das Verhältnis der gespeicherten Werte zueinander und/oder der Absolutwert der gespeicherten Werte durch Korrekturwerte kontinuierlich oder zyklisch korrigiert wird.

13. Verfahren nach Anspruch 12, dadurch gekennzeichnet, dass die Korrekturwerte manuell eingegeben werden.

14. Verfahren nach einem der Ansprüche 11 oder 12, dadurch gekennzeichnet, dass die Korrekturfaktoren bzw. die Rückführsignale aus dem Dickenzuwachs des Bandwickels (24) auf der Schärtrommel (6) und/oder aus der Zahl der Umdrehungen der Schärtrommel (6) und/oder aus der jeweiligen Relativlage des Schärriets (21) und/oder der Anpresswalze (23) in X- bzw. in Y-Richtung und/oder aus dem Abstand zwischen Anpresswalze (23) bzw. Schärriet (21) zur Schärtrommel (6) abgeleitet wer-den.

Fig 1

EP 0 423 067 A1

Fig 2

EP 0 423 067 A1

32  24   6  31   42

# Fig 3

50  39  23  40  49      41  43

# Fig 4

45  41  43  24a  40  24b  50-45    24c  50  23  24d

11

Fig 5

52
6
24
23
25
30
57

68
69
67
66
62
63
62a
64
46

X

Y

≈
≈

$Y_M$

$X_{K1} : Y_{K2}$

$Y_M / Y_{K1}$

$X : Y$
$X_{K1} : Y_{K1}$

55
35
56

60
61
65

EP 0 423 067 A1

Fig 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | FR-A-1 550 224 (PLUTTE)<br>* Seite 1, Zeile 70 - Seite 2, Zeile 47 * * Seite 4, Zeilen 64 - 100; Figuren 5, 6 *<br>– – – | 1,2-5,11 | D 02 H 3/00 |
| A | DE-A-3 301 196 (SCHLAFHORST)<br>* das ganze Dokument *<br>– – – | 1-5,11 | |
| A | EP-A-0 296 101 (BENNINGER)<br>* das ganze Dokument *<br>– – – | 5-14 | |
| A | DE-A-3 432 276 (BENNINGER)<br>– – – | | |
| A,D | DE-A-3 812 045 (BENNINGER)<br>– – – – – | | |

| | RECHERCHIERTE SACHGEBIETE (Int. Cl.5) |
|---|---|
| | D 02 H |

Der vorliegende Recherchenbericht wurde für alle Patentansprüche erstellt

| Recherchenort | Abschlußdatum der Recherche | Prüfer |
|---|---|---|
| Den Haag | 10 Januar 91 | BOUTELEGIER C.H.H. |